# EUROPÄISCHE PATENTSCHRIFT

(11) **EP 2 288 645 B1**
(45) Veröffentlichungstag und Bekanntmachung des Hinweises auf die Patenterteilung: **23.05.2012**
(21) Anmeldenummer: 09761727.8
(22) Anmeldetag: 10.06.2009
(51) Int. Cl.: C08J 3/24, B08B 1/00, A61L 15/60

(54) **VERFAHREN ZUR KONTINUIERLICHEN THERMISCHEN OBERFLÄCHENNACHVERNETZUNG WASSERABSORBIERENDER POLYMERPARTIKEL**
METHOD FOR THE CONTINUOUS THERMAL SECONDARY SURFACE CROSS-LINKING OF WATER-ABSORBING POLYMER PARTICLES
PROCÉDÉ POUR LA POST-RÉTICULATION THERMIQUE CONTINUE DE SURFACE DE PARTICULES POLYMÉRIQUES ABSORBANT L'EAU

(30) Priorität: 13.06.2008 EP 08158225
(43) Veröffentlichungstag der Anmeldung: 02.03.2011
(73) Patentinhaber: BASF SE, 67056 Ludwigshafen (DE)
(72) Erfinder: STEPHAN, Oskar, 68766 Hockenheim (DE); POSSEMIERS, Karl J., B-2970 Schilde (BE); BECKER, Ann, B-2150 Borsbeek (BE); VAN MIERT, Leo, B-2950 Kapellen (BE); DE KAEY, Ronny, 2640 Mortsel (BE)
(86) Internationale Anmeldenummer: PCT/EP2009/057132
(87) Internationale Veröffentlichungsnummer: WO 2009/150164

(56) Entgegenhaltungen:
- EP-A- 1 199 327
- EP-A- 1 462 460
- US-A1- 2008 020 013
- US-B1- 6 239 230

## Beschreibung

Die vorliegende Erfindung betrifft ein Verfahren zur kontinuierlichen thermischen Oberflächennachvernetzung wasserabsorbierender Polymerpartikel, wobei der Oberflächennachvernetzer mittels geeigneter Düsen auf die wasserabsorbierenden Polymerpartikel aufgebracht wird und die Düsen unter Verwendung eines Handschuhkastens ausgetauscht oder gereinigt werden.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology", F.L. Buchholz und A.T. Graham, Wiley-VCH, 1998, Seiten 71 bis 103, und in Ullmann's Encyclopedia of Industrial Chemistry, 6. Auflage, Band 35, Seiten 73 bis 93, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 g/cm² durchläuft ein Maximum.

Zur Verbesserung der Anwendungseigenschaften in der Windel, wie Permeabilität des gequollenen Gelbetts (SFC) und Absorption unter einem Druck von 49,2 g/cm² oder mehr, werden wasserabsorbierende Polymerpartikel üblicherweise oberflächennachvernetzt. Dadurch steigt nur der Vernetzungsgrad der Partikeloberfläche, wodurch die Zentrifugenretentionskapazität (CRC) und die Absorption unter einem Druck von 49,2 g/cm² zumindest teilweise entkoppelt werden können. Zur Oberflächennachvernetzung werden vorzugsweise getrocknete, gemahlene und abgesiebte wasserabsorbierende Polymerpartikel (Grundpolymer) mit einem Oberflächennachvernetzer beschichtet und thermisch oberflächennachvernetzt.

Der Oberflächennachvernetzer wird üblicherweise als Lösung mittels geeigneter Düsen kontinuierlich auf das Grundpolymer aufgesprüht. Die hierzu eingesetzten Düsen verschmutzen mit der Zeit und müssen gereinigt oder ausgetauscht werden. Dabei ist sicherzustellen, dass der betreffende Anlagenteil vor dem Öffnen frei von atembaren Stäuben, und bei Verwendung organischer Lösungsmittel, frei von Lösungsmitteldämpfen ist. Deshalb ist es notwendig die kontinuierliche Oberflächennachvernetzung zu unterbrechen. Weiterhin führen die mit der Abstellung verbundenen An- und Abfahrvorgänge zu Qualitätsschwankungen im Endprodukt.

Aufgabe der vorliegenden Erfindung war die Bereitstellung eines verbesserten Verfahrens zur kontinuierlichen thermischen Oberflächennachvernetzung wasserabsorbierender Polymerpartikel.

Gelöst wurde die Aufgabe durch ein Verfahren zur Herstellung oberflächennachvernetzter wasserabsorbierender Polymerpartikel, wobei die wasserabsorbierenden Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
erhalten werden, mindestens ein Oberflächennachvernetzer mittels mindestens einer Düse auf die wasserabsorbierenden Polymerpartikel aufgebracht wird und die wasserabsorbierenden Polymerpartikel thermisch oberflächennachvernetzt werden, dadurch gekennzeichnet, dass die mindestens eine Düse über den Innenraum eines an den die Düse enthaltenden Anlagenteil angrenzenden Handschuhkastens ausgetauscht oder gereinigt wird

Ein Handschuhkasten (glove box) ist ein Behälter, der gegenüber dem umgebenden Arbeitsraum gasdicht abgeschlossen ist. Der Handschuhkasten weist Durchführungen mit gasdichten Handschuhen auf, die Arbeiten im Innenraum des Handschuhkastens ermöglichen. Der Innenraum des Handschuhkastens kann durch Fenster eingesehen werden. Es ist aber auch möglich den Handschuhkasten vollständig aus transparentem Material, beispielsweise Polymethylmethacrylat, zu fertigen.Der Innenraum des Handschuhkastens wird vorzugsweise inertisiert, beispielsweise mit technischem Stickstoff.

Der Handschuhkasten befindet sich unmittelbar an dem die mindestens eine Düse enthaltenden Anlagenteil. Im Handschuhkasten können die zu Reinigung oder Austausch einer Düse notwendigen Arbeitsgeräte vorgelegt werden. Nachdem der Handschuhkasten gegenüber dem umgebenden Arbeitsraum geschlossen wurde, kann der Anlagenteil geöffnet und die verschmutzte Düse gereinigt oder ausgetauscht werden. Der Handschuhkasten wird also als Schleuse zwischen dem Anlageninnenraum und dem Anlagenaußenraum verwendet.

Der mindestens eine Oberflächennachvernetzer wird vorteilhaft mittels mindestens eines Düsenpaares auf die wasserabsorbierenden Polymerpartikel aufgebracht. Ein Düsenpaar sind zwei Düsen mit einer gemeinsamen Zuleitung, die für den Austausch nicht voneinander getrennt werden müssen.

In einer bevorzugten Ausführungsform der vorliegenden Erfindung werden mindestens zwei Düsen oder Düsenpaare eingesetzt, wobei jede Düse oder jedes Düsenpaar über separate Absperreinrichtungen verfügt.

Das erfindungsgemäße Verfahren ermöglicht den Austausch oder die Reinigung von Düsen ohne vollständige Abstellung der kontinuierlichen Oberflächennachvernetzung. Lediglich die auszutauschende oder zu reinigende Düse muss abgeschaltet werden. Es ist beispielsweise möglich zwei Düsen zu verwenden, wobei zur Reinigung der ersten Düse auf die zweite Düse umgeschaltet wird. Es ist aber auch möglich die Oberflächennachvernetzerlösung gleichzeitig über mehrere Düsen zu dosieren und während der Abstellung der zu reinigenden Düse die Dosiermenge der anderen Düsen entssprechend zu erhöhen.

Zusätzlich kann noch mindestens ein polyvalentes Kation mittels mindestens einer Düse oder mindestens eines Düsenpaares auf die wasserabsorbierenden Polymerpartikel aufgebracht werden. Vorzugsweise wird das polyvalente über separate Düsen versprüht. Beispielsweise kann eine Oberflächennachvernetzerlösung mittels dreier Düsenpaare und eine Lösung eines polyvalenten Kations mittels eines Düsenpaares auf die wasserabsorbierende Polymerpartikel aufgebracht werden.

Das erfindungsgemäße Verfahren ermöglicht Austausch und Reinigung von Düsen bei laufender Produktion. Überraschenderweise wurde gefunden, dass trotz kurzzeitiger Abstellung der Düsen bei laufender Produktion die Qualitätsschwankungen geringer ausfallen als bei dem herkömmlichen Verfahren mit vollständiger Abstellung der kontinuierlichen Oberflächennachvernetzung. Weiterhin werden die früher durch die Abstellung der Oberfilächennachvernetzung bedingten üblichen Produktionsausfälle vermieden.

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure. Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel kann dann getrocknet werden, vorzugsweise mit einem Bandtrockner, bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA (European Disposables and Nonwovens Association) empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein beheizter Pflugscharmischer verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindestens 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel werden zur weiteren Verbesserung der Eigenschaften thermisch oberflächennachvernetzt. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der thermischen Oberflächennachvernetzung zusätzlich polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch oberflächennachvernetzt.

Das Aufsprühen einer Lösung des Oberflächennachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Lödige-Mischer, Bepex-Mischer, Nauta-Mischer, Processall-Mischer und Schugi-Mischer. Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Wassergehalt gemäß der von der EDANA (European Disposables and Nonwovens Association) empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,2 g/cm² von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² der wasserabsorbierenden Polymerpartikel beträgt üblicherweise weniger als 35 g/g. Die Absorption unter einem Druck von 49,2 g/cm² wird analog der von der EDANA (European Disposables and Nonwovens Association) empfohlenen Testmethode Nr. WSP 242.2-05 "Absorption under Pressure" bestimmt, wobei statt eines Drucks von 21,0 g/cm² ein Druck von 49,2 g/cm² eingestellt wird.

Weiterere Gegenstände der vorliegenden Erfindung sind eine Vorrichtung zur Durchführung des erfindungsgemäßen Verfahrens.

## Patentansprüche

1. Verfahren zur kontinuierlichen Herstellung nachvemetzter wasserabsorbierender Polymerpartikel, wobei die wasserabsorbierenden Polymerpartikel durch Polymerisation einer Monomerlösung oder-suspension, enthaltend
a) mindestens ein ethylenisch ungesättigtes, säuregruppentragendes Monomer,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
erhalten werden, mindestens ein Nachvemetzer mittels mindestens einer Düse auf die wasserabsorbierenden Polymerpartikel aufgebracht wird und die wasserabsorbierenden Polymerpartikel thermisch nachvernetzt werden, **dadurch gekennzeichnet, dass** die mindestens eine Düse über den Innenraum eines an den die Düse enthaltenden Anlagenteil angrenzenden Handschuhkastens ausgetauscht oder gereinigt wird, ein Handschuhkasten ein gegenüber dem umgebenden Arbeitsraum gasdicht abgeschlossener Behälter ist und der Handschuhkasten als Schleuse zwischen dem Anlageninnenraum und dem Anlagenaußenraum verwendet wird.

2. Verfahren gemäß Anspruch 1, **dadurch gekennzeichnet, dass** der mindestens eine Nachvernetzer in einem Vertikalmischer auf die wasserabsorbierenden Polymerpartikel aufgebracht wird.

3. Verfahren gemäß einem der Ansprüche 1 oder 2, **dadurch gekennzeichnet, dass** die thermische Nachvernetzung in einem Scheibentrockner durchgeführt wird.

4. Verfahren gemäß einem der Ansprüche 1 bis 3, **dadurch gekennzeichnet, dass** der mindestens eine Nachvemetzer mittels mindestens eines Düsenpaares auf die wasserabsorbierenden Polymerpartikel aufgebracht wird.

5. Verfahren gemäß einem der Ansprüche 1 bis 4, **dadurch gekennzeichnet, dass** der mindestens eine Nachvemetzer mittels mindestens zweier Düsen oder Düsenpaare auf die wasserabsorbierenden Polymerpartikel aufgebracht wird und die Zuleitungen der mindestens zwei Düsen oder Düsenpaare über separate Absperreinrichtungen verfügen.

6. Verfahren gemäß einem der Ansprüche 1 bis 5, **dadurch gekennzeichnet, dass** zusätzlich mindestens ein polyvalentes Kation mittels mindestens einer Düse auf die wasserabsorbierenden Polymerpartikel aufgebracht wird.

7. Verfahren gemäß Anspruch 6, **dadurch gekennzeichnet, dass** das mindestens eine polyvalente Kation mittels mindestens eines Düsenpaares auf die wasserabsorbierenden Polymerpartikel aufgebracht wird.

8. Verfahren gemäß einem der Ansprüche 6 oder 7, **dadurch gekennzeichnet, dass** der mindestens eine Nachvernetzer mittels dreier Düsenpaare und das mindestens eine polyvalente Kation mittels eines Düsenpaares auf die wasserabsorbierenden Polymerpartikel aufgebracht werden.

9. Verfahren gemäß einem der Ansprüche 1 bis 8, **dadurch gekennzeichnet, dass** die wasserabsorbierenden Polymerpartikel eine Zentrifugenretentionskapazität von mindestens 15 g/g aufweisen.

10. Vorrichtung zur kontinuierlichen thermischen Nachvernetzung wasserabsorbierender Polymerpartikel, umfassend mindestens eine Düse und mindestens einen Handschuhkasten, wobei der Handschuhkasten an den die Düse enthaltenden Anlagenteil angrenzt, so dass die Düse über den Innenraum des Handschuhkastens ausgetauscht oder gereinigt werden kann, ein Handschuhkasten ein gegenüber dem umgebenden Arbeitsraum gasdicht abgeschlossener Behälter ist und der Handschuhkasten als Schleuse zwischen dem Anlageninnenraum und dem Anlagenaußenraum verwendet wird.

## Claims

1. A process for continuously preparing postcrosslinked water-absorbing polymer particles, the water-absorbing polymer particles being obtained by polymerizing a monomer solution or suspension comprising
a) at least one ethylenically unsaturated monomer bearing acid groups,
b) at least one crosslinker,
c) at least one initiator,
d) optionally one or more ethylenically unsaturated monomers copolymerizable with the monomers specified under a) and
e) optionally one or more water-soluble polymers,
at least one postcrosslinker being applied to the water-absorbing polymer particles by means of at least one nozzle and the water-absorbing polymer particles being thermally postcrosslinked, wherein the at least one nozzle is exchanged or cleaned via the interior of a glovebox adjoining the plant section comprising the nozzle, a glovebox is a vessel which is sealed gastight from the surrounding workspace and the glovebox is used as a lock between the plant interior and the plant exterior.

2. The process according to claim 1, wherein the at least one postcrosslinker is applied to the water-absorbing polymer particles in a vertical mixer.

3. The process according to either of claims 1 and 2, wherein the thermal postcrosslinking is carried out in a disk drier.

4. The process according to any one of claims 1 to 3, wherein the at least one postcrosslinker is applied to the water-absorbing polymer particles by means of at least one nozzle pair.

5. The process according to any one of claims 1 to 4, wherein the at least one postcrosslinker is applied to the water-absorbing polymer particles by means of at least two nozzles or nozzle pairs and the feed linens of the at least two nozzles or nozzle pairs possess separate shutoff devices.

6. The process according to any one of claims 1 to 5, wherein at least one polyvalent cation is additionally applied to the water-absorbing polymer particles by means of at least one nozzle.

7. The process according to claim 6, wherein the at least one polyvalent cation is applied to the water-absorbing polymer particles by means of at least one nozzle pair.

8. The process according to either of claims 6 and 7, wherein the at least one postcrosslinker is applied to the water-absorbing polymer particles by means of three nozzle pairs and the at least one polyvalent cation by means of one nozzle pair.

9. The process according to any one of claims 1 to 8, wherein the water-absorbing polymer particles have a centrifuge retention capacity of at least 15 g/g.

10. An apparatus for continuously thermally postcrosslinking water-absorbing polymer particles, comprising at least one nozzle and at least one glovebox, the glovebox adjoining the plant section comprising the nozzle such that the nozzle can be exchanged or cleaned via the interior of the glovebox, a glovebox being a vessel which is sealed gastight from the surrounding workspace and the glovebox being used as a lock between the plant interior and the plant exterior.

## Revendications

1. Procédé de fabrication continue de particules polymères absorbant l'eau post-réticulées, selon lequel les particules polymères absorbant l'eau sont obtenues par polymérisation d'une solution ou suspension de monomères contenant
a) au moins un monomère éthyléniquement insaturé, portant des groupes acides,
b) au moins un agent de réticulation,
c) au moins un initiateur,
d) éventuellement un ou plusieurs monomères éthyléniquement insaturés copolymérisables avec les monomères cités en a), et
e) éventuellement un ou plusieurs polymères solubles dans l'eau,
au moins un agent de post-réticulation est appliqué par au moins une buse sur les particules polymères absorbant l'eau et les particules polymères absorbant l'eau sont post-réticulées thermiquement, **caractérisé en ce que** la ou les buses sont remplacées ou nettoyées par l'espace intérieur d'une boîte à gants adjacente à la partie de l'unité contenant la buse, une boîte à gants étant un contenant isolé de manière étanche aux gaz de l'espace de travail environnant et la boîte à gants étant utilisée en tant que sas entre l'espace intérieur de l'unité et l'espace extérieur de l'unité.

2. Procédé selon la revendication 1, **caractérisé en ce que** le ou les agents de post-réticulation sont appliqués sur les particules polymères absorbant l'eau dans un mélangeur vertical.

3. Procédé selon l'une quelconque des revendications 1 ou 2, **caractérisé en ce que** la post-réticulation thermique est réalisée dans un séchoir à disques.

4. Procédé selon l'une quelconque des revendications 1 à 3, **caractérisé en ce que** le ou les agents de post-réticulation sont appliqués sur les particules polymères absorbant l'eau par au moins une paire de buses.

5. Procédé selon l'une quelconque des revendications 1 à 4, **caractérisé en ce que** le ou les agents de post-réticulation sont appliqués sur les particules polymères absorbant l'eau par au moins deux buses ou paires de buses et les conduites d'alimentation des deux buses ou paires de buses ou plus disposent de dispositifs de fermeture séparés.

6. Procédé selon l'une quelconque des revendications 1 à 5, **caractérisé en ce qu'**au moins un cation polyvalent est également appliqué sur les particules polymères absorbant l'eau par au moins une buse.

7. Procédé selon la revendication 6, **caractérisé en ce que** le ou les cations polyvalents sont appliqués sur les particules polymères absorbant l'eau par au moins une paire de buses.

8. Procédé selon l'une quelconque des revendications 6 ou 7, **caractérisé en ce que** le ou les agents de post-réticulation sont appliqués sur les particules polymères absorbant l'eau par trois paires de buses et le ou les cations polyvalents par une paire de buses.

9. Procédé selon l'une quelconque des revendications 1 à 8, **caractérisé en ce que** les particules polymères absorbant l'eau présentent une capacité de rétention centrifuge d'au moins 15 g/g.

10. Dispositif pour la post-réticulation thermique continue de particules polymères absorbant l'eau, comprenant au moins une buse et au moins une boîte à gants, la boîte à gants étant adjacente à la partie de l'unité contenant la buse, de manière à ce que la buse puisse être remplacée ou nettoyée par l'espace intérieur de la boîte à gants, une boîte à gants étant un contenant isolé de manière étanche aux gaz de l'espace de travail environnant et la boîte à gants étant utilisée en tant que sas entre l'espace intérieur de l'unité et l'espace extérieur de l'unité.
